# EUROPÄISCHE PATENTSCHRIFT

(11) **EP 1 133 948 B1**
(45) Veröffentlichungstag und Bekanntmachung des Hinweises auf die Patenterteilung: **15.01.2003**
(21) Anmeldenummer: 01102637.4
(22) Anmeldetag: 07.02.2001
(51) Int. Cl.: A47L 5/36, A47L 7/00, A47L 9/10, A47L 9/20, H02K 11/04, A47L 9/28

(54) **Elekrosauggerät, insbesondere für Staub**
Electrical suction apparatus, in particular for dust
Aspirateur électrique en particulier pour la poussière

(30) Priorität: 04.03.2000 DE 20004122 U
(43) Veröffentlichungstag der Anmeldung: 19.09.2001
(73) Patentinhaber: Electrostar Schöttle GmbH & Co., D-73262 Reichenbach (DE)
(72) Erfinder: Steckhan, Markus, Dipl.-Ing., 73730 Esslingen (DE); Bruntner, Eugen, 73278 Schlierbach (DE)
(74) Vertreter: KOHLER SCHMID + PARTNER

(56) Entgegenhaltungen:
- EP-A- 0 365 797
- EP-A- 0 578 081
- US-A- 5 611 107

## Beschreibung

Elektrosauggeräte, insbesondere für Staub, bestehen in der üblichen Bauweise aus einem Unterteil als Schmutzbehälter und einem Oberteil für den Motor, wobei die beiden Teile lösbar miteinander verbunden sind, um bei gefülltem Schmutzbehälter diesen entleeren zu können. Es ist fernerhin bekannt, zwischen den beiden Teilen wahlweise noch weitere Module anzuordnen, um den Schmutzbehälter zu vergrößern. Vielfach müssen jedoch Sonderausführungen geliefert werden, für die jeweils anders aufgebaute Motorteile gefertigt werden müssen. Um einerseits die Herstellung zu vereinfachen und andererseits Sonderausführungen leichter herstellen zu können, besteht erfindungsgemäß das Oberteil aus zwei lösbar miteinander verbundenen Modulen, von denen das untere Motormodul den Motor aufnimmt und das obere Elektronikmodul die Elektronik mit sämtlichen elektrischen Komponenten aufweist. Diese modulare Bauweise ermöglicht das Konzeptionieren des Gerätes direkt bei der Endmontage. Man kann also beliebige Motortypen mit den gleichen oder unterschiedlichen Elektronikmodulen kombinieren und auf diese Weise ohne allzu große Lagerhaltung die unterschiedlichsten Geräte in kürzester Zeit zusammenstellen.

In einer besonderen Ausführungsform weisen die beiden Module von einander lösbare elektrische Kontakte für die Stromversorgung des Motors und gegebenenfalls für einen Wassersensor auf. Auf diese Weise können zusätzliche Verkabelungen zwischen den beiden Modulen eingespart werden. Das Elektronikmodul ist vorzugsweise mit Steckdosen und einem oder mehreren Schaltern, insbesondere für den Motor, versehen. Einen besonderen Vorteil erhält man, wenn man einen, bei gefüllten Unterteil ansprechenden Unterdruckschalter ebenfalls im Elektronikmodul unterbringt, so dass sowohl eine Verkabelung als auch zusätzliche elektrische Kontakte zwischen den Modulen eingespart werden können. Dies gilt in gleicher Weise für ein weiteres Merkmal, wonach das Elektronikmodul mit Rüttelmagneten für die Filterreinigung versehen ist. Das Filtersystem selbst ist dabei im Motormodul angeordnet.

Bei den bekannten Staubsaugern mit Filterpatronen ist das Motorgebläse oberhalb des Filters angebracht. Dadurch ergibt sich eine große Bauhöhe des Oberteils. Durch Plattenfilter kann man die Bauhöhe zwar verringern, jedoch ist der Wirkungsgrad dieser Filter und die Reinigungsmöglichkeit erheblich ungünstiger als bei den üblichen Filterpatronen. Um hier eine grundsätzliche Verbesserung zu schaffen, setzt sich das Filtersystem aus zwei im Querschnitt etwa rechteckigen Filterelementen zusammen, wobei beidseits des Motors je ein Filterelement angeordnet ist. Dadurch kann bei gleichem Wirkungsgrad die Bauhöhe des Motorgehäuses erheblich verringert werden. Ein weiterer Vorteil der neben dem Motor angeordneten Filter ist darin zu sehen, dass diese nicht mehr im direkten Schmutzbereich liegen. Dies ist besonders wichtig beim Wassersaugen, da dann die Filter nur noch durch das Spritzwasser mit dem Wasser in Berührung kommen und nicht mehr direkt in diesem stehen. Vorzugsweise besteht jedes Filterelement aus einem Trägerrahmen mit aufgeklebtem Filtermaterial. Da die Trägerrahmen zweckmäßig aus Kunststoff gefertigt sind, weisen sie eine Metallplatte zur Kraftübertragung von den Rüttelmagneten auf.

Vorzugsweise sind im Elektronikmodul federnd abgestützte Druckstücke zum Einsatz der Metallplatten der Filterelemente vorgesehen. Beim Rütteln werden die Metallplatten und damit die Trägerrahmen gegen die Kraft der Federn angezogen und anschließend durch die Federn wiederum zurückgedrückt. Um zu verhindern, dass aus dem Motormodul Staub in das Elektronikmodul übertritt, sind die längsverschiebbaren Druckstücke gegenüber dem Gehäuse insbesondere durch Dichtringe abgedichtet.

Das Elektronikmodul ist zweckmäßigerweise als Haube ausgebildet, wobei alle elektrischen und elektronischen Teile in Kunststoff eingebettet sind. Vorzugsweise ist das Elektronikmodul schwenkbar mit dem Motormodul verbunden. Nach dem Abschwenken des Elektronikmoduls können die Filter dann zu einer Grundreinigung oder zum Austausch sehr einfach entnommen werden.

Die Zeichnung zeigt ein Ausführungsbeispiel der Erfindung. Es stellen dar:
- Figur 1: Vorderansicht eines Elektrostaubsaugers,

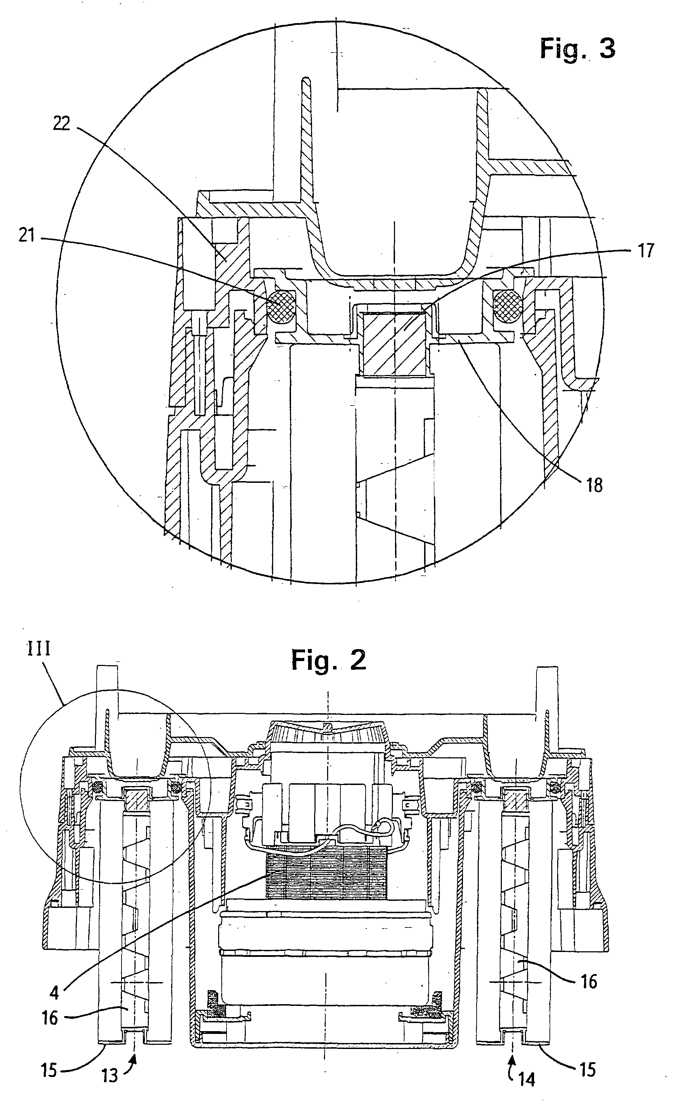

- Figur 2: einen teilweisen Querschnitt nach Fig. 1,
- Figur 3: den vergrößerten Ausschnitt III/3 der Fig. 2,

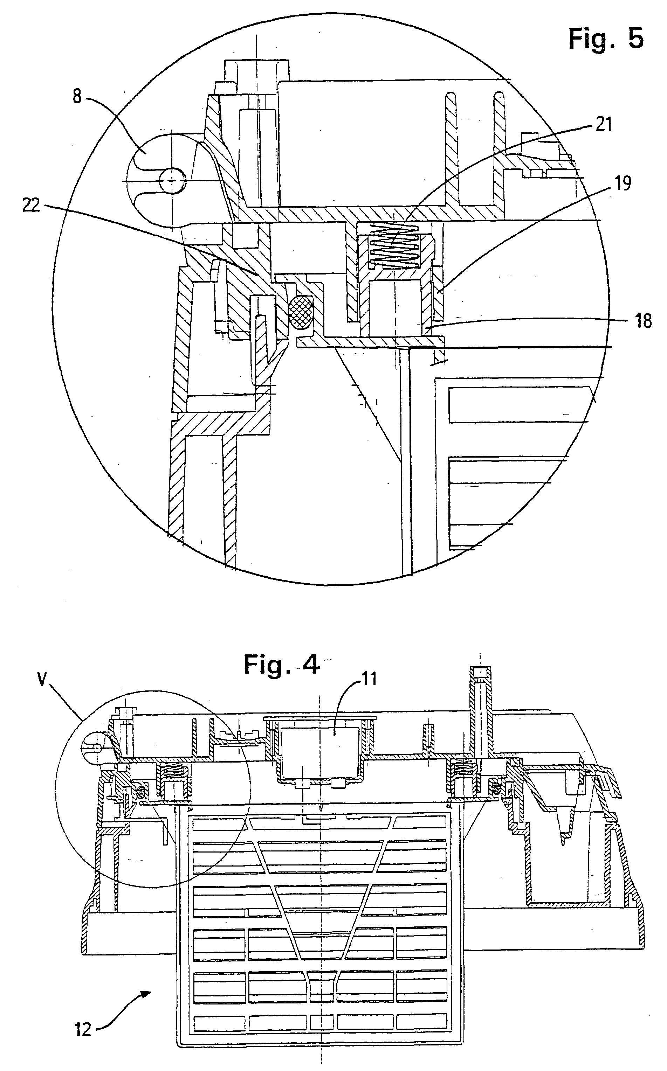

- Figur 4: einen anderen teilweisen Querschnitt nach Fig. 1,
- Figur 5: den vergrößerten Ausschnitt V/5 nach Fig. 4.

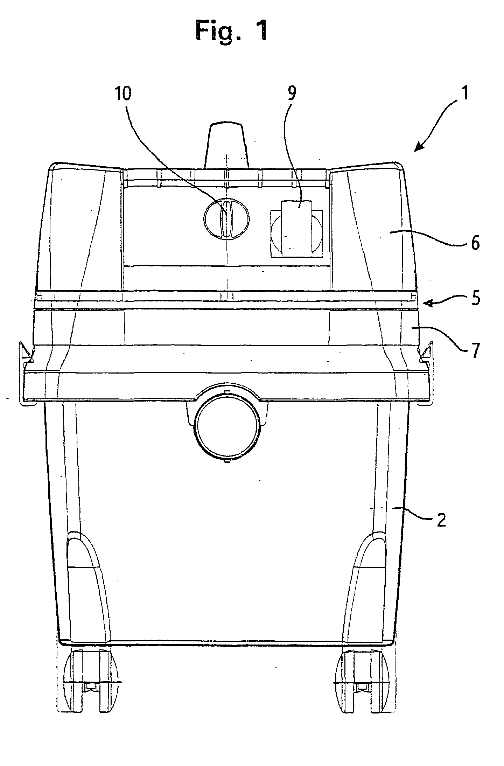

Wie aus Fig. 1 zu ersehen ist, setzt sich der Elektrostaubsauger 1 aus einem als Staubbehälter ausgebildeten Unterteil 2 und einem den Motor 4 aufweisenden Oberteil 5 zusammen. Das Oberteil 5 ist in zwei Module, nämlich das Elektronikmodul 6 und das Motormodul 7, unterteilt, welche über ein Gelenk 8 schwenkbar miteinander verbunden sind.

Im Elektronikmodul 6 sind in nicht dargestellter Weise die gesamte Elektronik mit sämtlichen elektrischen Komponenten angeordnet. Außerdem weist das Elektronikmodul 3 noch eine Steckdose 9 und einen Schalter 10 auf. Beide Module 6, 7 sind in nicht dargestellter Weise mit zusammenwirkenden elektrischen Kontakten versehen, so dass bei zugeschwenktem Elektronikmodul die elektrische Verbindung zum Motor 4 ohne zusätzliche Verkabelung hergestellt ist. Desweiteren sind im Elektronikmodul 6 Rüttelmagnete 11 für das Filtersystem 12 vorgesehen.

Die bisher bekannten unterhalb eines Gebläses angeordneten Filter wurden hier durch zwei im Querschnitt etwa rechteckige Filterelemente 13 und 14 ersetzt, welche seitlich neben dem Motor 4 angeordnet sind, wodurch sich in der Höhe eine erhebliche Platzeinsparung ergibt. Jedes Filterelement besteht aus einem Trägerrahmen 15 mit aufgeklebtem Filtermaterial 16. Außerdem ist an jedem Filter 13, 14 eine Metallplatte 17 vorgesehen, welche in den aus Kunststoff bestehenden Trägerrahmen 15 eingespritzt ist. Die Kraft des Magneten 11 wird dabei über die Metallplatten 17 auf die Filter 13 und 14 beim Rütteln übertragen. Die oberen Enden der Filter 13, 14 sind in Druckstücken 18 angeordnet, welche in Führungen 19 des Elektronikmoduls 6 längsverschiebbar gelagert sind und durch Federn 20 beaufschlagt werden. Um das Elektronikmodul 6 gegenüber dem Motormodul 7 abzudichten, sind zwischen den seitlichen Enden der Druckstücke 18 und dem Gehäuse 22 Runddichtungen 21 vorgesehen.

## Patentansprüche

1. Elektrosauggerät, insbesondere für Staub, bestehend aus mindestens einem Unterteil (2) als Schmutzbehälter und einem Oberteil (3) für den Motor (4), welche lösbar miteinander verbunden sind, **dadurch gekennzeichnet, daß** das Oberteil (3) aus zwei ebenfalls lösbar miteinander verbundenen Modulen besteht, von denen das untere Motormodul (7) den Motor (4) aufnimmt und das obere Elektronikmodul (6) die Elektronik mit sämtlichen elektrischen Komponenten aufweist.

2. Elektrosauggerät nach Anspruch 1, **dadurch gekennzeichnet, daß** die beiden Module (6,7) voneinander lösbare elektrische Kontakte für die Stromversorgung des Motors (4) und gegebenenfalls für einen Wassersensor aufweisen.

3. Elektrosauggerät nach einem oder beiden der vorhergehenden Ansprüche, **dadurch gekennzeichnet, daß** das Elektronikmodul (6) mit Steckdosen (9) und einem oder mehreren Schaltern (10), insbesondere für den Motor (4) versehen ist.

4. Elektrosauggerät nach einem oder mehreren der vorhergehenden Ansprüche, **dadurch gekennzeichnet, daß** das Elektronikmodul (6) einen bei gefülltem Unterteil (2) ansprechenden Unterdruckschalter aufweist.

5. Elektrosauggerät nach einem oder mehreren der vorhergehenden Ansprüche, **dadurch gekennzeichnet, daß** das Elektronikmodul (6) mit Rüttelmagneten (11) für die Filterreinigung versehen ist.

6. Elektrosauggerät nach einem oder mehreren der vorhergehenden Ansprüche, **dadurch gekennzeichnet, daß** im Motormodul (7) ein Filtersystem (12) vorgesehen ist.

7. Elektrosauggerät nach Anspruch 6, **dadurch gekennzeichnet, daß** das Filtersystem aus zwei im Querschnitt etwa rechteckigen Filterelementen (13,14) besteht, wobei beidseits des Motors (4) je ein Filterelement angeordnet ist.

8. Elektrosauggerät nach Anspruch 7, **dadurch gekennzeichnet, daß** jedes Filterelement (13,14) aus einem Trägerrahmen (15) mit aufgeklebtem Filtermaterial (16) besteht.

9. Elektrosauggerät nach Anspruch 8, **dadurch gekennzeichnet, daß** der Trägerrahmen (15) eine Metallplatte (17) zur Kraftübertragung von den Rüttelmagneten (11) aufweist.

10. Elektrosauggerät nach Anspruch 9, **dadurch gekennzeichnet, daß** im Elektronikmodul (6) federnd (20) abgestützte Druckstücke (19) zum Einsatz der Metallplatten (17) der Filterelemente (13,14) vorgesehen sind.

11. Elektrosauggerät nach Anspruch 10, **dadurch gekennzeichnet, daß** die längsverschiebbaren Druckstücke (19) gegenüber dem Gehäuse (22), insbesondere durch Dichtringe (21) abgedichtet sind.

12. Elektrosauggerät nach einem oder mehreren der vorhergehenden Ansprüche, **dadurch gekennzeichnet, daß** das Elektronikmodul (6) als Haube ausgebildet ist, wobei alle elektrischen und elektronischen Teile in Kunststoff eingebettet sind.

13. Elektrosauggerät nach einem oder mehreren der vorhergehenden Ansprüche, **dadurch gekennzeichnet, daß** das Elektronikmodul (6) schwenkbar (8) mit dem Motormodul (7) verbunden ist.

## Revendications

1. Aspirateur électrique, en particulier destiné à la poussière, se composant au moins d'une partie inférieure (2) en tant que compartiment réservé à la saleté et d'une partie supérieure (3) pour le moteur (4), qui sont reliées entre elles de façon détachable, **caractérisé en ce que** la partie supérieure (3) est constituée de deux modules également reliés entre eux de façon détachable, parmi lesquels le module moteur inférieur (7) loge le moteur (4) et le module électronique supérieur (6) abrite l'électronique et l'ensemble des composants électriques.

2. Aspirateur électrique selon la revendication 1, **caractérisé en ce que** les deux modules (6, 7) comportent des contacts électriques détachables les uns des autres pour l'alimentation en courant électrique du moteur (4) et éventuellement pour un détecteur d'eau.

3. Aspirateur électrique selon les revendications 1 et/ou 2, **caractérisé en ce que** le module électronique (6) est pourvu de prises électriques (9) et d'un ou de plusieurs commutateurs (10), en particulier pour le moteur (4).

4. Aspirateur électrique selon une ou plusieurs des revendications précédentes, **caractérisé en ce que** le module électronique (6) comporte un commutateur à dépression réagissant à l'état de remplissage de la partie inférieure (2).

5. Aspirateur électrique selon une ou plusieurs des revendications précédentes, **caractérisé en ce que** le module électronique (6) est doté de vibro-aimants (11) pour le nettoyage des filtres.

6. Aspirateur électrique selon une ou plusieurs des revendications précédentes, **caractérisé en ce qu'**un système de filtres (12) est prévu dans le module moteur (7).

7. Aspirateur électrique selon la revendication 6, **caractérisé en ce que** le système de filtres se compose de deux éléments filtrants de section transversale à peu près rectangulaire (13, 14), chacun d'eux étant respectivement disposé de chaque côté du moteur (4).

8. Aspirateur électrique selon la revendication 7, **caractérisé en ce que** chaque élément filtrant (13, 14) comporte un cadre de support (15) avec un matériau filtrant collé à celui-ci (16).

9. Aspirateur électrique selon la revendication 8, **caractérisé en ce que** le cadre de support (15) comporte une plaque métallique (17) pour la transmission de force des vibro-aimants (11).

10. Aspirateur électrique selon la revendication 9, **caractérisé en ce que** des éléments de pression (19) s'appuyant sur des ressorts (20) sont prévus dans le module électronique (6) pour la mise en oeuvre des plaques métalliques (17) des éléments filtrants (13, 14).

11. Aspirateur électrique selon la revendication 10, **caractérisé en ce que** les éléments de pression (19) mobiles dans la direction longitudinale sont étanchéifiés par rapport au carter (22), en particulier par des bagues d'étanchéité (21).

12. Aspirateur électrique selon une ou plusieurs des revendications précédentes, **caractérisé en ce que** le module électronique (6) est conçu comme capot, la totalité des composants électriques et électroniques étant ce faisant logés dans le plastique.

13. Aspirateur électrique selon une ou plusieurs des revendications précédentes, **caractérisé en ce que** le module électronique (6) est relié de façon pivotante (8) au module moteur (7).

## Claims

1. Electrical suction device, in particular for dust, comprising at least one lower portion (2) in the form of a dirt container and an upper portion (3) for the motor (4), which are releasably connected to each other, **characterised in that** the upper portion (3) comprises two modules which are also releasably connected to each other and of which the lower motor module (7) receives the motor (4) and the upper electronics module (6) has the electronic arrangement with all of the electrical components.

2. Electrical suction device according to claim 1, **characterised in that** the two modules (6, 7) have electrical contacts, which can be released from each other, for the supply of current to the motor (4) and optionally for a water sensor.

3. Electrical suction device according to either or both of the preceding claims, **characterised in that** the electronics module (6) is provided with sockets (9) and one or more switches (10), in particular for the motor (4).

4. Electrical suction device according to any one or more of the preceding claims, **characterised in that** the electronics module (6) has a reduced pressure switch which is actuated when the lower portion (2) is full.

5. Electrical suction device according to any one or more of the preceding claims, **characterised in that** the electronics module (6) is provided with oscillating magnets (11) for filter cleaning.

6. Electrical suction device according to any one or more of the preceding claims, **characterised in that** a filter system (12) is provided in the motor module (7).

7. Electrical suction device according to claim 6, **characterised in that** the filter system comprises two filter elements (13, 14), which are substantially rectangular in cross-section, one filter element being arranged at each side of the motor (4).

8. Electrical suction device according to claim 7, **characterised in that** each filter element (13, 14) comprises a carrier frame (15) having filter material (16) adhesively bonded thereto.

9. Electrical suction device according to claim 8, **characterised in that** the carrier frame (15) has a metal plate (17) for transmitting forces from the oscillating magnets (11).

10. Electrical suction device according to claim 9, **characterised in that** load-carrying members (19) which are resiliently (20) supported in the electronics module (6) are provided for the use of the metal plates (17) of the filter elements (13, 14).

11. Electrical suction device according to claim 10, **characterised in that** the longitudinally displaceable load-carrying members (19) are sealed relative to the housing (22), in particular by sealing rings (21).

12. Electrical suction device according to any one or more of the preceding claims, **characterised in that** the electronics module (6) is in the form of a hood, all of the electrical and electronic elements being embedded in plastics material.

13. Electrical suction device according to any one or more of the preceding claims, **characterised in that** the electronics module (6) is connected pivotably (8) to the motor module (7).
